# EUROPEAN PATENT SPECIFICATION

(11) **EP 4 326 981 B1**
(45) Date of publication and mention of the grant of the patent: **12.03.2025**
(21) Application number: 21721820.5
(22) Date of filing: 19.04.2021
(51) Int. Cl.: F02M 21/02, F02B 19/12, F02B 43/10, F02D 13/02, F02D 19/06, F02D 19/08, F02D 29/06, F02D 41/00

(54) **INTERNAL COMBUSTION ENGINE**
BRENNKRAFTMASCHINE
MOTEUR À COMBUSTION INTERNE

(43) Date of publication of application: 28.02.2024
(73) Proprietor: Innio Jenbacher GmbH & Co OG, 6200 Jenbach (AT)
(72) Inventor: SPYRA, Nikolaus, 6020 Innsbruck (AT); FIMML, Wolfgang, 6212 Maurach in Tirol (AT)
(74) Representative: Torggler & Hofmann Patentanwälte - Innsbruck
(86) International application number: PCT/AT2021/060128
(87) International publication number: WO 2022/221890

(56) References cited:
- EP-A1- 2 898 946
- WO-A1-2019/035718
- WO-A2-02/071451
- JP-A- H05 332 152
- MUKHERJEE SHREYA ET AL: "Low-temperature ammonia decomposition catalysts for hydrogen generation", APPLIED CATALYSIS B. ENVIRONMENTAL, ELSEVIER, AMSTERDAM, NL, vol. 226, 16 December 2017 (2017-12-16), pages 162 - 181, XP085636162, ISSN: 0926-3373, DOI: 10.1016/J.APCATB.2017.12.039

## Description

The invention concerns an internal combustion engine in which a main fuel for internal combustion is ammonia (NH₃). In another aspect the invention concerns a genset for generation of electric power.

Such internal combustion engines are disclosed in US 2011/0114069 A1, US 2011/0259290A1, EP 2 378 094 A1, US 2010/0019506 A1, WO 2019/035718 A1 and JP H05 332152 A.

US 3,455,282 discloses an internal combustion engine having main combustion chambers with a compression ratio between 12 and 16 which are provided with a spark plug to start combustion of a combustion charge consisting of air and ammonia. The addition of small quantities of hydrogen as a combustion promoter is discussed.

Another internal combustion engine where ammonia is used as a fuel is disclosed in EP 3 669 059 A1. Therein it is described that pilot ignition with a pre-chamber of an air/ammonia mixture in the main combustion chamber of an internal combustion engine is used in both Otto and diesel engines in order to ensure good ignition of the air/ammonia mixture in an internal combustion engine. The pre-chamber has its own air or air/fuel intake, wherein an air/hydrogen mixture or other carbon containing fuels can be used for pilot ignition. It is further described that hydrogen or other carbon containing fuels can be added to the ammonia/air mixture in the main combustion chamber.

It is an object of the invention to provide an internal combustion engine with an improved operability of burning ammonia as a main fuel.

It is another object of the invention to provide a genset for generation of electric power.

This object is achieved by an internal combustion engine having the features of claim 1 and a genset comprising an electric generator coupled to such an internal combustion engine. Embodiments of the invention are defined in the dependent claims.

In an internal combustion engine according to the invention there is provided at least:
- an intake manifold which can provide gaseous medium (air, or a mixture of air and ammonia in gaseous form, or a mixture of air and ammonia partly in liquid and partly in gaseous form, or one of the aforementioned with a combustion promoter in liquid or gaseous form) to a plurality of piston-cylinder-units
- at least one cylinder head with a plurality of piston-cylinder-units, each piston cylinder-unit being provided with a prechamber
- at least one ammonia source for providing ammonia to each piston-cylinder-unit as part of the combustion charge (at least one other part of the combustion charge being air) and to the prechambers
- at least one hydrogen source for providing hydrogen to the prechambers via at least one prechamber valve of each piston-cylinder-unit

Aside from the prechamber each piston-cylinder-unit has at least:
- a (preferably cylindrical) main combustion chamber for combustion of a combustion charge, a volume of the main combustion chamber being defined by the at least one cylinder head and a reciprocally moving piston, the motion of the piston preferably defining a variable volume of the main combustion chamber
- at least one intake valve coupled to the intake manifold
- an ignition device arranged in the prechamber to start combustion of the combustion charge indirectly via flame torches which enter the main combustion chamber from the prechamber and are created by the ignition of an ignitable air-fuel-mixture inside the prechamber

The at least one ammonia source can provide ammonia:
- to the main combustion chambers via the intake manifold and the at least one intake valve as part of a mixture of at least air and ammonia and
- to the prechambers via the at least one prechamber valve provided to the prechamber of each piston-cylinder-unit

The engine further comprises a control device to operate the internal combustion engine.

The control device is configured to at least control an actuator for controlling a ratio of hydrogen to ammonia of hydrogen-enriched ammonia provided to the prechambers.

The at least one hydrogen source can comprise at least one hydrogen tank and/or a hydrogen supply line, and comprises at least one reformer for cracking ammonia.

The use of a reformer as part of the at least one hydrogen source (or as the at least one hydrogen source, if there are no other parts such as a control valve and/or a bypass line) allows on-demand production of hydrogen in an amount adjusted to the need as combustion promoter in the prechambers. No hydrogen tank for storage of hydrogen is needed. A small reformer can be used.

If on-demand production of hydrogen is to be used at least the following operating parameters should be measured using sensors known in the art:
- engine load, and/or
- temperature of the gaseous medium inside the intake manifold, possibly after a turbocharger, if one is present, and an intercooler, if one is present, and/or
- exhaust gas temperature, and/or
- pressure of the gaseous medium inside the intake manifold, possibly after a turbocharger, if one is present

Based on measured operating parameters and using, for example a look-up table and/or a model and/or a transfer function, the ratio of hydrogen to ammonia (wherein the hydrogen is to be produced in the reformer and mixed to the ammonia provided to the prechambers) can be determined. A control device can control (open-looped or closed-looped) an actuator, for example a control valve, to provide this amount.

As a general rule:
- the lower an engine load, the higher the ratio of hydrogen to ammonia should be
- the lower the temperature of the gaseous medium inside the intake manifold, the higher the ratio of hydrogen to ammonia should be
- the higher the exhaust gas temperature, the higher the ratio of hydrogen to ammonia should be
- the lower the pressure of the gaseous medium inside the intake manifold, the higher the ratio of hydrogen to ammonia should be

The above-said is also valid if hydrogen from a hydrogen tank or a supply line is to be used instead of or together with hydrogen from the reformer of the at least one hydrogen source.

By way of example the at least one hydrogen source is configured to provide hydrogen to the prechamber of each piston-cylinder-unit in a range of 0 to 10 mass%, preferably of 0 to 5 mass%, in particular 0 to 3 mass% (note that all mass% of hydrogen are given with respect to the total fuel mass brought into a prechamber).

In some embodiments the control device is configured to at least control a lambda of the combustion charge inside each main combustion chamber to be between 0,9 and 1,2, preferably between 0,98 and 1,02.

In such embodiments it can be provided that the engine further comprises at least one intercooler coupled to the intake manifold and the control device being further configured to configured to control the intercooler to provide gaseous medium to the intake manifold with a temperature of at least 40 °C, preferably with at least 60 °C, and preferably with a temperature below 220 °C.

Preferably the control device is configured to control the ignition device to start combustion of the combustion charge in each piston-cylinder-unit between -35 degrees to -10 degrees before the piston reaches top dead center (TDC).

In some embodiments the motion of the piston defines a variable volume geometry of the main combustion chamber having a geometrical compression ratio between 10 and 20, preferably 12 and 18, in particular preferably between 14 and 18.

Preferably an internal combustion engine according to the invention can be provided wherein a diameter of each main combustion chamber is at least 130 mm.

In some embodiments the internal combustion engine comprises an exhaust manifold coupled to the plurality of piston-cylinder-units.

In these embodiments there can be provided at least one catalytic converter, preferably a three-way-catalytic-converter or a SCR-converter, coupled to the exhaust manifold.

In some embodiments the internal combustion engine comprises at least one turbocharger to charge the gaseous medium provided to the intake manifold.

In some embodiments a brake mean effective pressure of the internal combustion engine is higher than 10 bar, preferably higher than 15 bar, in particular higher than 18 bar.

Preferably, at least one valve of the at least one prechamber valve for providing ammonia to the prechamber is a gas valve for providing ammonia in gaseous form, possibly mixed with air, to the prechamber, enriched with hydrogen.

In some embodiments the control device is configured to provide ammonia to the main combustion chamber in liquid form after opening of the at least one intake valve until 50 degrees crank angle before the piston reaches TDC. This ensures that ammonia is introduced when the pressure in the cylinder is not too high to be negative with respect to the energy balance (such that ammonia does not have to be injected with too high a pressure or too late in the compression stage).

If ammonia in liquid form is used it should be considered that for combustion the ammonia has to be evaporated which needs additional energy when compared to using gaseous ammonia. To provide the additional energy it is advantageous to (compared to when gaseous ammonia is used):
- to increase the temperature of the gaseous medium which is to be mixed with the liquid ammonia, and/or
- to design the combustion chambers with a higher geometrical compression ratio to reach a desired temperature for combustion

In some embodiments the ammonia source provides or stores ammonia in liquid form and there is provided a heat exchanger to use energy of exhaust gas to evaporate the ammonia into a gaseous form which is then provided to the main combustion chambers.

In some embodiments the internal combustion engine can be provided with:
- optionally at least one turbocharger followed by
- at least one intercooler
- optionally followed by a throttle valve
- followed by the intake manifold which is coupled to
- the piston-cylinder-units which are coupled to
- the exhaust manifold followed by
- a turbine of the optional at least one turbocharger followed by
- an optional catalytic converter followed by
- an optional heat exchanger

In some embodiments the control device is configured to control the intake valves and the exhaust valves of the piston-cylinder-units with overlapping opening times to provide internal EGR (exhaust gas recirculation), preferably with a rate (defined as mass of EGR/(mass of fuel + mass of air + mass of EGR) larger than 0 % and below 30 %, in particular with a rate between 1 % and 20 %.

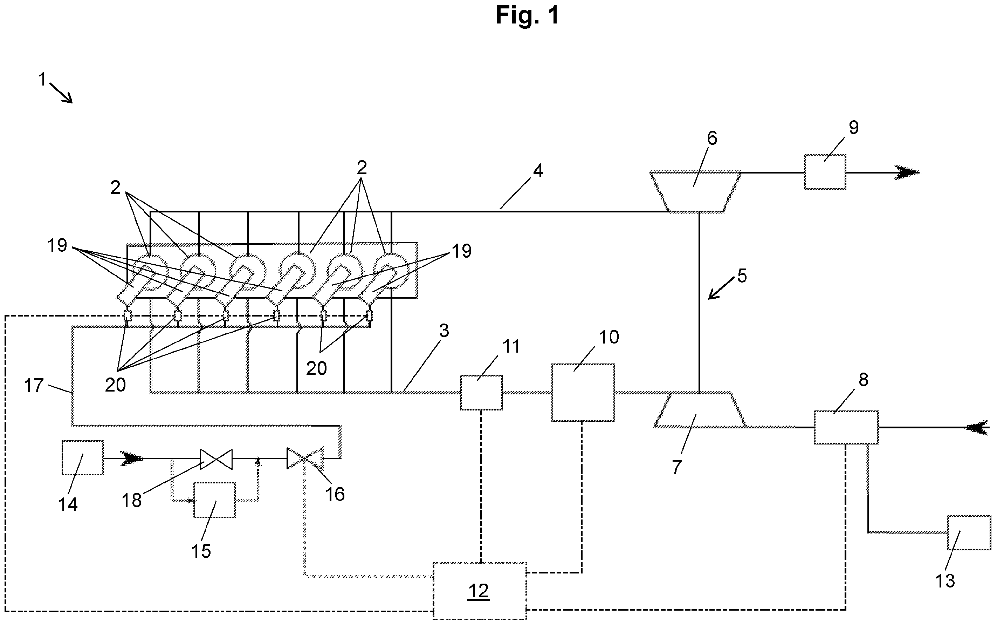

Embodiments of the invention are discussed with reference to figure 1.

Figure 1 shows an internal combustion engine 1 comprising an intake manifold 3 which can provide gaseous medium (air, a mixture of air and ammonia in gaseous form, a mixture of air and ammonia partly in liquid and partly in gaseous form, one of the aforementioned with a combustion promoter in liquid or gaseous form) to a plurality of piston-cylinder-units, at least one intercooler 10 coupled to the intake manifold 3 and at least one cylinder head with a plurality of piston-cylinder-units.

Each piston-cylinder-unit has at least a cylindrical main combustion chamber 2 for combustion of a combustion charge, a volume of the main combustion chamber 2 being defined by the at least one cylinder head and a reciprocally moving piston, the motion of the piston defining a variable volume geometry of the main combustion chamber 2 preferably having a geometrical compression ratio between 10 and 20.

Each piston-cylinder-unit is provided with a prechamber 19 in which the ignition device is arranged. The ammonia enriched with hydrogen generated by a reformer 15 is provided to the prechambers 19 via prechamber valves 20 (which can be, by way of example, in the form of injectors).

Furthermore, each piston-cylinder-unit has at least one intake valve coupled to the intake manifold 3 and an ignition device to start combustion of the combustion charge.

The internal combustion engine 1 is provided with at least one ammonia source (two ammonia sources 13, 14 are shown in the figures) for providing ammonia to each piston-cylinder-unit as part of the combustion charge via the intake manifold 3 and the at least one intake valve as part of gaseous medium in form of a mixture of at least air and ammonia.

The internal combustion engine 1 has a control device 12 which is configured to control the intercooler 10 to provide gaseous medium with a temperature of at least 40 °C to the intake manifold and control a lambda of the combustion charge inside each main combustion chamber 2 to be between 0,9 and 1,2 (in this embodiment by controlling a gas mixer 8 to which one of the ammonia sources 13, 14 is coupled).

The control device 12 is further configured to control a throttle valve 11 and a first control valve 16 which allows addition of ammonia coming from an ammonia source 14 enriched with hydrogen generated by a reformer 15 to the prechambers 19 via an ammonia supply line 17 and the prechamber valves 20.

In the shown embodiment the hydrogen source comprises not only the reformer but also a bypass line in which a second control valve 18 is arranged and the amount of hydrogen-enriched ammonia provided to the ammonia supply line 17 can be adjustably controlled by the control device 12 via the second control valve 18. If no second control valve 18 is provided a fixed amount of hydrogen-enriched ammonia can be achieved by suitably choosing a pressure of the ammonia source 14 and/or a diameter of the bypass line and/or the dimension of the reformer 15. It should be noted that the provision of a bypass line is not necessary and the reformer 15 could be the only connection between the ammonia source 14 and the first control valve 16.

Instead of two ammonia sources 13, 14 a single ammonia source 13, 14 to provide ammonia to both the intake manifold 3 and the hydrogen source could be used.

The gaseous medium provided to the intake manifold 3 is charged by a compressor 7 of a turbocharger 5 which is driven by an exhaust turbine 6 of the turbocharger 5 which is arranged in the exhaust manifold 4.

A catalytic converter 9 is also coupled to the exhaust manifold 4.

### List of reference signs:

- 1: internal combustion engine
- 2: main combustion chamber
- 3: intake manifold
- 4: exhaust manifold
- 5: turbocharger
- 6: exhaust turbine
- 7: compressor
- 8: gas mixer
- 9: catalytic converter
- 10: intercooler
- 11: throttle valve
- 12: control device
- 13: ammonia source
- 14: ammonia source
- 15: reformer
- 16: first control valve
- 17: ammonia supply line
- 18: second control valve
- 19: prechamber
- 20: prechamber valve
- 21: ammonia source

## Claims

1. Internal combustion engine (1) comprising:
- an intake manifold (3) which can provide gaseous medium to a plurality of piston-cylinder-units;
- at least one cylinder head with the plurality of piston-cylinder-units, each piston-cylinder-unit having at least
• a main combustion chamber (2) for combustion of a combustion charge, a volume of the main combustion chamber (2) being defined by the at least one cylinder head and a reciprocally moving piston,
• at least one intake valve for coupling the main combustion chamber (2) to the intake manifold (3),
• a prechamber (19) which is coupled to the main combustion chamber (2) and
• an ignition device arranged in the prechamber (19) to start combustion of the combustion charge indirectly via flame torches which enter the main combustion chamber (2) from the prechamber (19) and are created by the ignition of an ignitable air-fuel-mixture inside the prechamber (19);
- at least one ammonia source (13, 14) for providing ammonia to each piston-cylinder-unit
• via the intake manifold (3) and the at least one intake valve as part of gaseous medium in form of a mixture of at least air and ammonia as part of the combustion charge and
• via at least one prechamber valve (20) provided to the prechamber (19);
- at least one hydrogen source for providing hydrogen to the prechamber via the at least one prechamber valve of each piston-cylinder-unit, the at least one hydrogen source comprising at least one reformer (15) for cracking ammonia; and
- a control device (12) to operate the internal combustion engine (1), wherein the control device (12) is configured to at least control an actuator for controlling a ratio of hydrogen to ammonia of hydrogen-enriched ammonia provided to the prechamber (19).

2. The engine of claim 1, wherein the at least one hydrogen source comprises at least one hydrogen tank and/or a hydrogen supply line.

3. The engine of at least one of the preceding claims wherein the control device (12) is configured to at least control a lambda of the combustion charge inside each main combustion chamber (2) to be between 0,9 and 1,2, preferably between 0,98 and 1,02.

4. The engine of the preceding claim further comprising at least one intercooler (10) coupled to the intake manifold (3) and the control device (12) being further configured to control the intercooler (10) to provide gaseous medium to the intake manifold (3) with a temperature of at least 40 °C, preferably with at least 60 °C, and preferably with a temperature below 220 °C.

5. The engine of one at least one of the two preceding claims, wherein the control device (12) is configured to control the ignition device to start combustion of the combustion charge in each piston-cylinder-unit between -35 degrees to -10 degrees before TDC.

6. The engine of at least one of the preceding claims, wherein the motion of the piston defines a variable volume geometry of the main combustion chamber having a geometrical compression ratio between 10 and 20, preferably 12 and 18, in particular preferably between 14 and 18.

7. The engine of at least one of the preceding claims, wherein the hydrogen source is configured to provide hydrogen to each prechamber (19) in a range of 0 to 10 mass%, preferably of 0 to 5 mass%, in particular 0 to 3 mass%.

8. The engine of at least one of the preceding claims, wherein each main combustion chamber (2) has a cylindrical cross-section with a diameter of at least 130 mm.

9. The engine of at least one of the preceding claims, wherein the internal combustion engine (1) comprises an exhaust manifold (4) coupled to the plurality of piston-cylinder-units by exhaust valves and, preferably, at least one catalytic converter (9), in particular a three-way-catalytic-converter or a SCR converter, coupled to the exhaust manifold (4).

10. The engine of the preceding claim, wherein the control device (12) is configured to control the intake valves and the exhaust valves of the piston-cylinder-units with overlapping opening times to provide internal EGR, preferably with a rate larger than 0 % and below 30 %, in particular with a rate between 1 % and 20 %.

11. The engine of at least one of the preceding claims, wherein the internal combustion engine (1) comprises at least one turbocharger (5) to charge the gaseous medium provided to the intake manifold (3).

12. The engine of at least one of the preceding claims, wherein a brake mean effective pressure of the internal combustion engine (1) is higher than 10 bar, preferably higher than 15 bar, in particular higher than 18 bar.

13. The engine of the preceding claim, wherein at least one of the at least one prechamber valve (20) for providing ammonia to the prechamber (19) is a gas valve for providing ammonia in gaseous form, possibly mixed with air, to the prechamber (19).

14. The engine of at least one of the preceding claims wherein the control device (12) is configured to provide ammonia to the main combustion chamber (2) in liquid form after opening of the at least one intake valve until 50 degrees crank angle before the piston reaches TDC.

15. The engine of at least one of the preceding claims, wherein the at least one ammonia source (13, 14) stores ammonia in liquid form and there is provided a heat exchanger to use energy of exhaust gas to evaporate the ammonia into a gaseous form which is then provided to the main combustion chamber (2).

16. A genset for generation of electrical power comprising an electric generator coupled an internal combustion engine (1) of at least one of the preceding claims.

## Patentansprüche

1. Brennkraftmaschine (1) umfassend:
∘ einen Ansaugkrümmer (3), der eine Vielzahl von Kolben-Zylinder-Einheiten mit gasförmigem Medium versorgen kann;
∘ wenigstens einen Zylinderkopf mit einer Vielzahl von Kolben-Zylinder-Einheiten, wobei jede Kolben-Zylinder-Einheit wenigstens folgendes aufweist
▪ eine Hauptbrennkammer (2) zur Verbrennung einer Verbrennungsladung, wobei ein Volumen der Hauptbrennkammer (2) durch den wenigstens einen Zylinderkopf und einen sich hin- und herbewegenden Kolben definiert ist,
▪ wenigstens ein Einlassventil zum Koppeln der Hauptbrennkammer (2) mit dem Ansaugkrümmer (3),
▪ eine Vorkammer (19), welche mit der Hauptbrennkammer (2) gekoppelt ist
und
▪ eine in der Vorkammer (19) angeordnete Zündvorrichtung, um die Verbrennung der Verbrennungsladung indirekt über eine Zündfackel zu starten, welche von der Vorkammer (19) aus in die Hauptbrennkammer (2) eintreten und durch die Zündung eines zündfähigen Luft-Kraftstoff-Gemischs im Inneren der Vorkammer (19) erzeugt werden;
∘ wenigstens eine Ammoniakquelle (13, 14) zur Versorgung jeder Kolben-Zylinder-Einheit mit Ammoniak
▪ über den Ansaugkrümmer (3) und das wenigstens eine Einlassventil als Teil des gasförmigen Mediums in Form eines Gemischs aus wenigstens Luft und Ammoniak als Teil der Verbrennungsladung und
▪ über wenigstens ein Vorkammerventil (20), welches für die Vorkammer (19) vorgesehen ist;
∘ wenigstens eine Wasserstoffquelle zum Vorsehen von Wasserstoff für die Vorkammer über das wenigstens eine Vorkammerventil jeder Kolben-Zylinder-Einheit, wobei die wenigstens eine Wasserstoffquelle wenigstens einen Reformer (15) zum Spalten von Ammoniak umfasst und
∘ eine Steuervorrichtung (12) zum Betreiben des internen Verbrennungsmotors (1), wobei die Steuervorrichtung (12) derart konfiguriert ist, dass sie wenigstens einen Aktuator zum Steuern eines Verhältnisses von Wasserstoff zu Ammoniak von wasserstoffangereichertem Ammoniak, welches für die Vorkammer (19) vorgesehen ist, steuert.

2. Der Motor nach Anspruch 1, wobei die wenigstens eine Wasserstoffquelle wenigstens einen Wasserstofftank und/oder eine Wasserstoffzufuhrleitung umfasst.

3. Der Motor nach wenigstens einem der vorhergehenden Ansprüche, wobei die Steuervorrichtung (12) derart konfiguriert ist, dass sie wenigstens ein Lambda der Verbrennungsladung im Inneren jeder Hauptbrennkammer (2) auf einen Wert zwischen 0,9 und 1,2, bevorzugt zwischen 0,98 und 1,02, steuert.

4. Der Motor nach dem vorhergehenden Anspruch umfasst ferner wenigstens einen mit dem Ansaugkrümmer (3) gekoppelten Zwischenkühler (10), wobei die Steuervorrichtung (12) ferner derart konfiguriert ist, dass sie den Zwischenkühler (10) derart steuert, dass er dem Ansaugkrümmer (3) ein gasförmiges Medium mit einer Temperatur von wenigstens 40 °C, vorzugsweise mit wenigstens 60 °C und vorzugsweise mit einer Temperatur unter 220 °C bereitstellt.

5. Der Motor nach wenigstens einem der beiden vorhergehenden Ansprüche, wobei die Steuervorrichtung (12) derart konfiguriert ist, dass sie die Zündvorrichtung derart steuert, dass die Verbrennung der Verbrennungsladung in jeder Kolben-Zylinder-Einheit zwischen -35 Grad und -10 Grad vor dem oberen Totpunkt_startet.

6. Der Motor nach wenigstens einem der vorhergehenden Ansprüche, wobei die Bewegung des Kolbens eine variable Volumengeometrie der Hauptbrennkammer definiert, welche ein geometrisches Verdichtungsverhältnis zwischen 10 und 20, bevorzugt 12 und 18, besonders bevorzugt zwischen 14 und 18 aufweist.

7. Der Motor nach wenigstens einem der vorhergehenden Ansprüche, wobei die Wasserstoffquelle derart konfiguriert ist, dass sie jeder Vorkammer (19) Wasserstoff in einem Bereich von 0 bis 10 Massenprozent, bevorzugt von 0 bis 5 Massenprozent, insbesondere von 0 bis 3 Massenprozent, vorsieht.

8. Der Motor nach wenigstens einem der vorhergehenden Ansprüche, wobei jede Hauptbrennkammer (2) einen zylindrischen Querschnitt mit einem Durchmesser von wenigstens 130 mm aufweist.

9. Der Motor nach wenigstens einem der vorhergehenden Ansprüche, wobei der Verbrennungsmotor (1) einen Abgaskrümmer (4) umfasst, welcher über Auslassventile mit der Vielzahl von Kolben-Zylinder-Einheiten gekoppelt ist, und vorzugsweise wenigstens einen Abgaskatalysator (9), insbesondere einen Drei-Wege-Abgaskatalysator oder einen SCR-Abgaskatalysator, welcher mit dem Abgaskrümmer (4) gekoppelt ist.

10. Der Motor nach dem vorhergehenden Anspruch, wobei die Steuervorrichtung (12) derart konfiguriert ist, dass sie die Einlassventile und die Auslassventile der Kolben-Zylinder-Einheiten mit überlappenden Öffnungszeiten steuert, um eine interne Abgasrückführung (AGR) vorzusehen, bevorzugt mit einer Rate größer als 0 % und unter 30 %, insbesondere mit einer Rate zwischen 1 % und 20 %.

11. Der Motor nach wenigstens einem der vorhergehenden Ansprüche, wobei der Verbrennungsmotor (1) wenigstens einen Turbolader (5) zur Aufladung des gasförmigen Mediums umfasst, welches für den Ansaugkrümmer (3) vorgesehen ist.

12. Der Motor nach wenigstens einem der vorhergehenden Ansprüche, wobei ein bremsender Mitteldruck des Verbrennungsmotors (1) höher als 10 bar, bevorzugt höher als 15 bar, insbesondere höher als 18 bar ist.

13. Der Motor nach dem vorhergehenden Anspruch, wobei wenigstens eines des wenigstes einen Vorkammerventils (20) zum Vorsehen von Ammoniak in der Vorkammer (19) ein Gasventil zum Vorsehen von Ammoniak in gasförmiger Form, möglicherweise mit Luft gemischt, in der Vorkammer (19) ist.

14. Der Motor nach wenigstens einem der vorhergehenden Ansprüche, wobei die Steuervorrichtung (12) derart konfiguriert ist, dass sie Ammoniak in flüssiger Form nach dem Öffnen des wenigstens einen Einlassventils bis zu einem Kurbelwinkel von 50 Grad, bevor der Kolben den oberen Totpunkt erreicht, der Hauptbrennkammer (2) zuführt.

15. Der Motor nach wenigstens einem der vorhergehenden Ansprüche, wobei die wenigstens eine Ammoniakquelle (13, 14) Ammoniak in flüssiger Form speichert und ein Wärmetauscher vorgesehen ist, um Energie des Abgases zu verwenden, um das Ammoniak in gasförmiger Form zu verdampfen, das dann der Hauptbrennkammer (2) zugeführt wird.

16. Ein Stromaggregat zur Generierung elektrischer Leistung, umfassend einen elektrischen Generator, welcher mit einem Verbrennungsmotor (1) nach wenigstens einem der vorhergehenden Ansprüche gekoppelt ist.

## Revendications

1. Moteur à combustion interne (1) comprenant :
- un collecteur d'admission (3) qui peut fournir un milieu gazeux à une pluralité d'unités piston-cylindre ;
- au moins une culasse avec la pluralité d'unités piston-cylindre, chaque unité piston-cylindre ayant au moins · une chambre de combustion principale (2) pour la combustion d'une charge de combustion, un volume de la chambre de combustion principale (2) étant défini par l'au moins une culasse et un piston mobile en va-et-vient,
· au moins une soupape d'admission pour l'accouplement de la chambre de combustion principale (2) au collecteur d'admission (3),
· une préchambre (19) qui est accouplée à la chambre de combustion principale (2)
et
· un dispositif d'allumage agencé dans la préchambre (19) pour démarrer la combustion de la charge de combustion indirectement par l'intermédiaire de torches à flamme qui entrent dans la chambre de combustion principale (2) à partir de la préchambre (19) et sont créées par l'allumage d'un mélange air-carburant inflammable à l'intérieur de la préchambre (19) ;
- au moins une source d'ammoniac (13, 14) pour fournir de l'ammoniac à chaque unité piston-cylindre
· par l'intermédiaire du collecteur d'admission (3) et de l'au moins une soupape d'admission en tant que partie de milieu gazeux sous la forme d'un mélange d'au moins de l'air et de l'ammoniac en tant que partie de la charge de combustion et
· par l'intermédiaire d'au moins une soupape de préchambre (20) fournie à la préchambre (19) ;
- au moins une source d'hydrogène pour la fourniture d'hydrogène à la préchambre par l'intermédiaire de l'au moins une soupape de préchambre de chaque unité piston-cylindre, l'au moins une source d'hydrogène comprenant au moins un reformeur (15) pour le craquage de l'ammoniac ; et
- un dispositif de commande (12) pour actionner le moteur à combustion interne (1), dans lequel le dispositif de commande (12) est configuré pour au moins commander un actionneur pour la commande d'un rapport hydrogène/ammoniac d'ammoniac enrichi en hydrogène fourni à la préchambre (19).

2. Moteur selon la revendication 1, dans lequel l'au moins une source d'hydrogène comprend au moins un réservoir d'hydrogène et/ou une conduite d'alimentation en hydrogène.

3. Moteur selon au moins une des revendications précédentes dans lequel le dispositif de commande (12) est configuré pour au moins commander un lambda de la charge de combustion à l'intérieur de chaque chambre de combustion principale (2) pour qu'il soit compris entre 0,9 et 1,2, de préférence entre 0,98 et 1,02.

4. Moteur selon la revendication précédente comprenant en outre au moins un refroidisseur intermédiaire (10) accouplé au collecteur d'admission (3) et au dispositif de commande (12) qui est en outre configuré pour commander le refroidisseur intermédiaire (10) pour fournir un milieu gazeux au collecteur d'admission (3) à une température d'au moins 40 °C, de préférence d'au moins 60 °C, et de préférence à une température inférieure à 220 °C.

5. Moteur selon au moins une des deux revendications précédentes, dans lequel le dispositif de commande (12) est configuré pour commander le dispositif d'allumage pour démarrer la combustion de la charge de combustion dans chaque unité piston-cylindre entre -35 degrés et - 10 degrés avant le point mort haut.

6. Moteur selon au moins une des revendications précédentes, dans lequel le mouvement du piston définit une géométrie à volume variable de la chambre de combustion principale ayant un rapport de compression géométrique entre 10 et 20, de préférence 12 et 18, en particulier de préférence entre 14 et 18.

7. Moteur selon au moins une des revendications précédentes, dans lequel la source d'hydrogène est configurée pour fournir de l'hydrogène à chaque préchambre (19) dans une plage de 0 à 10 % en masse, de préférence de 0 à 5 % masse, en particulier de 0 à 3 % en masse.

8. Moteur selon au moins une des revendications précédentes, dans lequel chaque chambre de combustion principale (2) présente une coupe transversale cylindrique avec un diamètre d'au moins 130 mm.

9. Moteur selon au moins une des revendications précédentes, dans lequel le moteur à combustion interne (1) comprend un collecteur d'échappement (4) accouplé à la pluralité d'unités piston-cylindre par des soupapes d'échappement, et, de préférence, au moins un convertisseur catalytique (9), en particulier un convertisseur catalytique à trois voies ou un convertisseur RCS, accouplé au collecteur d'échappement (4).

10. Moteur selon la revendication précédente, dans lequel le dispositif de commande (12) est configuré pour commander les soupapes d'admission et les soupapes d'échappement des unités piston-cylindre avec des temps d'ouverture se chevauchant pour fournir une RGE interne, de préférence avec un taux supérieur à 0 % et inférieur à 30 %, en particulier avec un taux entre 1 % et 20 %.

11. Moteur selon au moins une des revendications précédentes, dans lequel le moteur à combustion interne (1) comprend au moins un turbocompresseur (5) pour charger le milieu gazeux fourni au collecteur d'admission (3).

12. Moteur selon au moins une des revendications précédentes, dans lequel une pression efficace moyenne de frein du moteur à combustion interne (1) est supérieure à 10 bars, de préférence supérieure à 15 bars, en particulier supérieure à 18 bars.

13. Moteur selon la revendication précédente, dans lequel au moins une de l'au moins une soupape de préchambre (20) pour fournir de l'ammoniac à la préchambre (19) est une soupape de gaz pour fournir de l'ammoniac sous forme gazeuse, éventuellement mélangé avec de l'air, à la préchambre (19).

14. Moteur selon au moins une des revendications précédentes dans lequel le dispositif de commande (12) est configuré pour fournir de l'ammoniac à la chambre de combustion principale (2) sous forme liquide après l'ouverture de l'au moins une soupape d'admission jusqu'à un angle de manivelle de 50 degrés avant que le piston n'atteigne le point mort haut.

15. Moteur selon au moins une des revendications précédentes, dans lequel l'au moins une source d'ammoniac (13, 14) stocke de l'ammoniac sous forme liquide et un échangeur de chaleur est fourni pour utiliser l'énergie de gaz d'échappement pour évaporer l'ammoniac sous une forme gazeuse qui est ensuite fourni à la chambre de combustion principale (2).

16. Groupe électrogène pour la génération d'énergie électrique comprenant un générateur électrique couplé à un moteur à combustion interne (1) selon au moins une des revendications précédentes.
